# EUROPEAN PATENT APPLICATION

(11) **EP 4 841 731 A1**
(43) Date of publication of application: **18.11.2026**
(21) Application number: 25772753.7
(22) Date of filing: 11.02.2025
(51) Int. Cl.: H01M 10/0525, H01M 10/0567

(54) **SECONDARY BATTERY AND ELECTRIC DEVICE**

(30) Priority: 22.03.2024 CN 202410338847
(71) Applicant: Contemporary Amperex Technology Co., Limited, Ningde, Fujian 352100 (CN)
(72) Inventor: GUO, Jie, Ningde, Fujian 352100 (CN); ZHANG, Cuiping, Ningde, Fujian 352100 (CN); HAN, Changlong, Ningde, Fujian 352100 (CN); WU, Zeli, Ningde, Fujian 352100 (CN); WANG, Guan, Ningde, Fujian 352100 (CN)
(74) Representative: Kraus & Lederer PartGmbB
(86) International application number: PCT/CN2025/076811
(87) International publication number: WO 2025/195043

(57) **Abstract**

The present application belongs to the technical field of batteries, and particularly relates to a secondary battery and an electric device. The secondary battery comprises a negative electrode sheet and an electrolyte. The negative electrode sheet comprises a negative electrode active material. The negative electrode active material comprises a graphitized carbon material, and the negative electrode active material satisfies the following conditions: (1.1) the specific surface area of the negative electrode active material is 0.5 m²/g-3.0 m²/g; and (1.2) the volume distribution particle size Dv1 of the negative electrode active material is greater than or equal to 1.5 µm. The electrolyte includes a carboxylic ester solvent and a film-forming stabilizer. The design mode of the present application is beneficial for improving the battery performance.

## Description

### CROSS-REFERENCE TO RELATED APPLICATIONS

The present application claims priority to Chinese Patent Application No. 2024103388474, filed on March 22, 2024, entitled "SECONDARY BATTERY AND ELECTRICAL APPARATUS", the entire content of which is incorporated herein by reference.

### TECHNICAL FIELD

The present application belongs to the field of batteries, and in particular relates to a secondary battery and an electrical apparatus.

### BACKGROUND

Secondary batteries, due to their outstanding characteristics such as light weight, no pollution, and memoryless effect, are widely used in various consumer electronic products and electric vehicles. Among them, lithium-ion batteries have a very wide range of applications in fields such as portable electronic devices and electric vehicles.

As the application scope of secondary batteries becomes increasingly wider, the requirements for battery performance are also getting higher and higher.

### SUMMARY OF THE INVENTION

The present application provides a secondary battery and an electrical apparatus. The secondary battery designed in the present application is used to balance the comprehensive performance of the battery, such as achieving a compromise between cycle stability and fast charging performance to a certain extent.

A first aspect of the present application is to provide a secondary battery, including:
a negative electrode plate: including a negative electrode active material, where the negative electrode active material satisfies the following conditions:
(1.1) a specific surface area of the negative electrode active material is 0.5 m²/g to 3.0 m²/g; and
(1.2) a volume distribution particle size Dv1 of the negative electrode active material is ≥ 1.5 µm; and
the negative electrode active material includes a graphitized carbon material; and
an electrolyte solution: including a carboxylate-based solvent and a film-forming stabilizer.

The graphitized carbon material in the present application, as a negative electrode active material, has the characteristics of small specific surface area and low content of small-particle-size particles. When a negative electrode active material with these characteristics is used in conjunction with an electrolyte solution containing carboxylate-based solvents and film-forming stabilizers, it can improve the rate performance of secondary batteries and reduce the impact on the cycling performance of batteries. Specifically, the negative electrode active material according to the present application has a relatively small specific surface area, which can effectively reduce the side reactions between it and the electrolyte solution, thus preparing for the use of carboxylate-based solvents. This is because carboxylate-based solvents have the advantages of low viscosity and low surface tension, which makes them easier to diffuse to the positive and negative electrode surfaces. By improving the wettability of the positive and negative electrode active materials to the electrolyte, they can accelerate the diffusion rate of lithium ions and thus improve the rate performance of the battery. However, it also has obvious drawbacks: the probability of side reactions occurring on the positive and negative electrode surfaces is high, resulting in more gas production, which is not conducive to the cyclability of the battery. The present application selects a negative electrode active material with a relatively small specific surface area and a film-forming stabilizer to reduce the probability of side reactions. At the same time, the present application also controls the content of small-particle-size negative electrode active materials, thereby reducing the amount used to further reduce side reactions. Considering from another aspect, in the original negative electrode active material, the small-particle-size material occupies the internal pores, making the lithium-ion transport path more tortuous, thereby increasing the actual path length of lithium ions. The present application's choice to control the content of the small-particle-size negative electrode active material also plays a positive role in improving the rate performance of the battery. Therefore, the design method according to this application is beneficial for balancing the fast charging performance and the cycling performance of secondary batteries.

In some embodiments of the present application, the specific surface area BET of the negative electrode active material is 0.5 m²/g to 2.0 m²/g;
and/or;
the volume distribution particle size Dv1 of the negative electrode active material is 1.9 µm to 3.1 µm.

In some embodiments of the present application, the graphitized carbon material satisfies at least one of the following:
(2.1) an orientation index (OI) value of the graphitized carbon material is ≤ 24, the orientation index (OI) value being derived from peak intensity values of a plane (110) and a plane (004) in an X-ray powder diffraction pattern of the graphitized carbon material; and
(2.2) a volume distribution particle size of the graphitized carbon material satisfies: 7.5 µm ≤ Dv50 ≤ 20 µm, Dv10 ≥ 3.5 µm, and Dv90 ≤ 40 µm.

In some embodiments of the present application, the graphitized carbon material satisfies at least one of the following:
(3.1) an orientation index of the graphitized carbon material satisfies: 10 ≤ OI value ≤ 22; and
(3.2) a volume distribution particle size of the graphitized carbon material satisfies: 10 µm ≤ Dv50 ≤ 18.5 µm, 3.5 µm ≤ Dv10 ≤ 7.0 µm, Dv90 ≤ 40 µm.

In some embodiments of the present application, the negative electrode active material further includes an amorphous carbon, where the amorphous carbon includes one or both of hard carbon or soft carbon;
and/or;
a volume distribution particle size of the amorphous carbon satisfies: 3.5 µm ≤ Dv50 ≤ 7.0 µm;
   and/or;
the graphitized carbon material includes one or more of natural graphite, artificial graphite, and composite graphite.

In some embodiments of the present application, the graphitized carbon material has a core-shell structure, a core of the core-shell structure including one or more of natural graphite, artificial graphite, and composite graphite, and a shell of the core-shell structure including an amorphous carbon coating layer.

In some embodiments of the present application, based on a total mass of the negative electrode active material, a mass percentage content of the graphitized carbon material is greater than 75%.

In some embodiments of the present application, the carboxylate-based solvent satisfies at least one of the following:
(4.1) the carboxylate has the following structural formula:

   R1-COO-R2,

   where R1 and R2 each independently include a substituted and/or unsubstituted C1-C5 alkyl group; and
(4.2) based on a mass of the electrolyte solution, a mass percentage content of the carboxylate is 5% to 70%.

In some embodiments of the present application, the carboxylate-based solvent satisfies at least one of the following:
(5.1) the carboxylate includes one or more of ethyl acetate, methyl acetate, ethyl propionate, propyl acetate, methyl propionate, and methyl butyrate; and
(5.2) based on a mass of the electrolyte solution, a mass percentage content of the carboxylate is 10% to 60%.

In some embodiments of the present application, the electrolyte solution further includes a carbonate solvent, the carbonate solvent including one or more of ethylene carbonate, propylene carbonate, fluoroethylene carbonate, vinylene carbonate, dimethyl carbonate, diethyl carbonate, and ethyl methyl carbonate.

In some embodiments of the present application, the film-forming stabilizer satisfies at least one of the following:
(6.1) based on a total mass of the electrolyte solution, a mass percentage content of the film-forming stabilizer is 0.02% to 6%; and
(6.2) the film-forming stabilizer includes one or more of boron-containing lithium salts, phosphorus-containing lithium salts, and sulfur-containing lithium salts;
   and/or;
the boron-containing lithium salts include one or more of lithium tetrafluoroborate, lithium bis(oxalato)borate, and lithium difluoro(oxalato)borate;
   and/or;
the phosphorus-containing lithium salts include one or more of lithium difluorophosphate, lithium fluorophosphate, and lithium phosphate;
   and/or;
the sulfur-containing lithium salts include one or more of lithium fluorosulfonate, lithium sulfate, and lithium aminosulfonate.

In some embodiments of the present application, the film-forming stabilizer includes lithium fluorosulfonate and lithium difluorophosphate, where based on a total mass of the electrolyte solution, a mass percentage content of the lithium difluorophosphate is ≤ 1%, and a mass percentage content of the lithium fluorosulfonate is greater than or equal to 0.1% and less than 2%.

In some embodiments of the present application, the secondary battery further includes a positive electrode plate, the positive electrode plate including a positive electrode active material, where a specific surface area of the positive electrode active material is 8 m²/g to 17 m²/g.

In some embodiments of the present application, the positive electrode active material includes a lithium-containing transition metal phosphate, where the lithium-containing transition metal phosphate includes olivine-type lithium manganese iron phosphate, a chemical formula of the olivine-type lithium manganese iron phosphate being Li₍₁₋ₓ₁₎ Feₓ₂Mn₍₁₋ₓ₂₎PO₄, where 0 ≤ x1 < 1, 0 ≤ x2 ≤ 1.

A second aspect of the present application is to provide an electrical apparatus, including the secondary battery according to the first aspect.

The foregoing description is merely an overview of the technical solutions of the present application. In order that technical means of the present application can be understood more clearly so that the technical means can be implemented according to content of the specification, and in order that the foregoing and other objectives, features, and advantages of the present application can be understood more clearly, specific embodiments of the present application are described below.

### DESCRIPTION OF DRAWINGS

By reading the detailed description of the preferred embodiments below, various other advantages and benefits will become apparent to those of ordinary skill in the art. The drawings are used for the purpose of illustrating the preferred embodiments only and are not to be considered a limitation to the present application. Moreover, throughout the accompanying drawings, the same components are indicated by the same reference numerals. In the accompanying drawings:
FIG. 1 is a schematic structural diagram of a lithium-ion diffusion path in a negative electrode active material of the prior art;
FIG. 2 is a schematic structural diagram of a battery according to some examples of the present application;
FIG. 3 is a schematic exploded structural diagram of a battery according to some examples of the present application;
FIG. 4 is a schematic structural diagram of a vehicle according to some examples of the present application;
FIG. 5 is a schematic structural diagram of a battery pack according to some examples of the present application;
FIG. 6 is a schematic structural diagram of one type of negative electrode plate according to some examples of the present application; and
FIG. 7 is a schematic structural diagram of another type of negative electrode plate according to some examples of the present application.

Reference numerals in the Detailed Description:
10000. Vehicle;
1000. Battery; 2000. Controller; 3000. Motor;
100. Battery cell;
200. Box body; 210. First part; 220. Second part;
10. Secondary battery;
101. Case; 102. Electrode assembly; 103. Cover plate;
1. Negative electrode plate;
11. Negative electrode current collector;
12. Negative electrode film layer;
Coordinate axis x direction: a length direction or a width direction of the negative electrode plate;
Coordinate axis z direction: a thickness direction of the negative electrode plate.

### DETAILED DESCRIPTION

Hereinafter, embodiments of the secondary battery and electrical apparatus of the present application are described in detail and specifically disclosed with appropriate reference to the accompanying drawings. However, there are cases where unnecessarily detailed descriptions may be omitted. For example, there are cases where detailed descriptions of well-known items and repeated descriptions of actually identical structures are omitted. This is to avoid unnecessary redundancy in the following descriptions and to facilitate understanding by those skilled in the art. In addition, the accompanying drawings and subsequent descriptions are provided for those skilled in the art to fully understand the present application, and are not intended to limit the subject matter recited in the claims.

The "ranges" disclosed in the present application are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit can be combined with any upper limit to form a range. For example, it is expected that a range from 60 to 120 and a range from 80 to 110, if listed for specific parameters, are understood as a range from 60 to 110 and a range from 80 to 120. In addition, if the listed minimum range values are 1 and 2 and if the listed maximum range values are 3, 4, and 5, all the following ranges can be expected: 1-3, 1-4, 1-5, 2-3, 2-4, and 2-5. In the present application, unless otherwise stated, a numerical range "a-b" represents an abbreviated representation of any combination of real numbers between a and b, where a and b are both real numbers. For example, the numerical range "0-5" indicates that all real numbers between "0-5" have been listed herein, and "0-5" is only a shortened representation of these numerical combinations. In addition, when a parameter is expressed as an integer ≥ 2, it is equivalent to disclosing that the parameter is, for example, an integer of 2, 3, 4, 5, 6, 7, 8, 9, 10, 11, 12, etc.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise particularly stated, all steps in the present application may be performed in sequence or randomly, preferably in sequence. For example, the method includes steps (a) and (b), which means that the method may include steps (a) and (b) performed in sequence, or may include steps (b) and (a) performed in sequence. For example, it is mentioned that the method may further include step (c), which means that step (c) may be added to the method in any order. For example, the method may include steps (a), (b) and (c), or may further include steps (a), (c) and (b), or may further include steps (c), (a) and (b), and the like.

Unless otherwise particularly stated, the "including" and "comprising" mentioned in the present application mean inclusive or exclusive. For example, the terms "including" and "comprising" may indicate that other components not listed may be further included or comprised, or only the listed components may be included or comprised.

Unless otherwise specifically stated, in the present application, the term "or" is inclusive. For example, the phrase "A or B" means "A, B, or both A and B." More specifically, any one of the following conditions satisfies the condition "A or B": A is true (or present) and B is false (or absent); A is false (or absent) and B is true (or present); or both A and B are true (or present).

Unless otherwise particularly stated, in the present application, terms "first," "second" and the like, are used only to distinguish different objects and are not to be understood as indicating or implying a relative significance or implicitly specifying the number, particular order, or primary and secondary relationship of the technical features indicated.

Unless otherwise particularly stated, in the present application, the term "a plurality of" refers to two or more (including two). Similarly, "a plurality of groups" refers to two or more groups (including two groups), and "a plurality of sheets" refers to two or more sheets (including two sheets).

The term "alkyl" is intended to include straight-chain saturated hydrocarbon structures having 1 to 20 carbon atoms. The term "alkyl" is also intended to include branched or cyclic hydrocarbon structures having 3 to 20 carbon atoms. When an alkyl group having a specific number of carbon atoms is specified, it is intended to encompass all geometric isomers having that number of carbon atoms; thus, for example, "butyl" is meant to include n-butyl, sec-butyl, isobutyl, tert-butyl and cyclobutyl; and "propyl" includes n-propyl, isopropyl and cyclopropyl. Examples of alkyl groups include, but are not limited to, methyl, ethyl, n-propyl, isopropyl, cyclopropyl, n-butyl, isobutyl, sec-butyl, tert-butyl, cyclobutyl, n-pentyl, isopentyl, neopentyl, cyclopentyl, methylcyclopentyl, ethylcyclopentyl, n-hexyl, isohexyl, cyclohexyl, n-heptyl, octyl, cyclopropyl, cyclobutyl, norbornyl, and the like.

The term "substituted" encompasses the replacement of hydrogen atoms in an alkyl group with other groups, the number of substitutions being determined by the number of hydrogen atoms.

Secondary batteries have been widely used in various products due to their advantages such as high energy density, long cycle life, safety and reliability. In recent years, with the significant increase in demand for secondary batteries as energy sources, higher requirements have also been placed on the performance of secondary batteries, such as kinetic performance, cycling performance, and the like.

Graphite is the most commonly used negative electrode active material for secondary batteries, but the kinetic performance of graphite is poor, especially during high-rate discharge, the capacity of the secondary battery decays rapidly.

The prior art discloses various methods to improve the problems mentioned above, such as increasing the content of secondary particles in graphite, or reducing the particle size of graphite to shorten the lithium-ion diffusion path, or improving the viscosity of the electrolyte, etc. However, improving kinetic performance simultaneously creates new problems. How to balance both the rate performance and cyclability of a secondary battery is a technical problem to be actually solved by the present application.

Based on the above considerations, in order to solve the problem that the comprehensive performance of secondary batteries still needs to be improved, a secondary battery and an electrical apparatus have been obtained according to the aforementioned design concept and through relevant experimental exploration.

The secondary battery according to the present application includes a negative electrode plate and an electrolyte solution. The negative electrode plate includes a negative electrode active material including a graphitized carbon material, where the negative electrode active material satisfies the following conditions: (1.1) a specific surface area of the negative electrode active material is 0.5 m²/g to 3.0 m²/g; and (1.2) a volume distribution particle size Dv1 of the negative electrode active material is ≥ 1.5 µm; and the electrolyte solution includes a carboxylate-based solvent and a film-forming stabilizer.

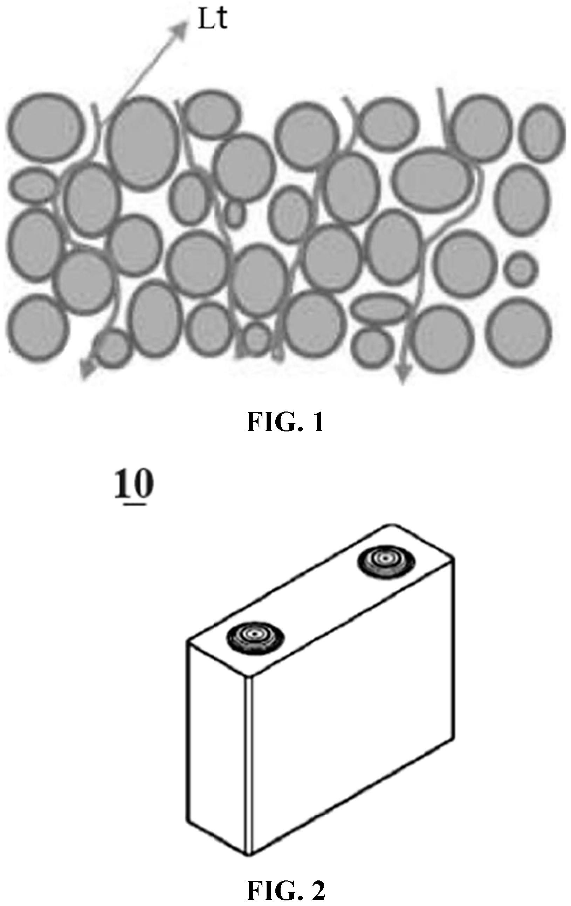

The graphitized carbon material in the present application, as a negative electrode active material, has the characteristics of small specific surface area and low content of small-particle-size particles. When a negative electrode active material with these characteristics is used in conjunction with an electrolyte solution containing carboxylate-based solvents and film-forming stabilizers, it can improve the rate performance of secondary batteries and reduce the impact on the cycling performance of batteries. Specifically, the negative electrode active material according to the present application has a relatively small specific surface area, which can effectively reduce the side reactions between it and the electrolyte solution, thus preparing for the use of carboxylate-based solvents. This is because carboxylate-based solvents have the advantages of low viscosity and low surface tension, which makes them easier to diffuse to the positive and negative electrode surfaces. By improving the wettability of the positive and negative electrode active materials to the electrolyte, they can accelerate the diffusion rate of lithium ions and thus improve the rate performance of the battery. However, it also has obvious drawbacks: the probability of side reactions occurring on the positive and negative electrode surfaces is high, resulting in more gas production, which is not conducive to the cyclability of the battery. The present application selects a negative electrode active material with a relatively small specific surface area and a film-forming stabilizer to reduce the probability of side reactions. At the same time, the present application also controls the content of small-particle-size negative electrode active materials, thereby reducing the amount used to further reduce side reactions. Considering from another aspect, in the original negative electrode active material, the small-particle-size material occupies the internal pores, making the lithium-ion transport path more tortuous, thereby increasing the actual path length of lithium ions. For details, reference may be made to the schematic diagram of FIG. 1 of the drawings of the description. Lt is the actual path length of lithium ions within the negative electrode active material layer. With reference to FIG. 1, it can be seen that Lt increases due to the presence of the small-particle-size material. The present application's choice to control the content of the small-particle-size negative electrode active material also plays a positive role in improving the rate performance of the battery. Therefore, the design method according to this application is beneficial for balancing the fast charging performance and the cycling performance of secondary batteries.

The rate performance of the secondary battery according to the present application is improved, and it can be used for high-current charging and discharging. For another example, the secondary battery has high cycling stability, which can ultimately improve the experience of the battery user. The secondary battery may include an outer package. The outer package may be used to encapsulate an electrode assembly and an electrolyte solution. The outer package of the secondary battery may be a hard case, such as a hard plastic case, an aluminum case, a steel case, etc. The outer package of the secondary battery may also be a soft package, for example, a bag-type soft package. The material of the soft package may be plastic, and as the plastic, polypropylene, polybutylene terephthalate, polybutylene succinate and the like can be listed.

The shape of the secondary battery is not particularly limited in the present application, and the secondary battery may be cylindrical, prismatic, or in any other shape. For example, FIG. 2 is a secondary battery 10 with a square structure as an example.

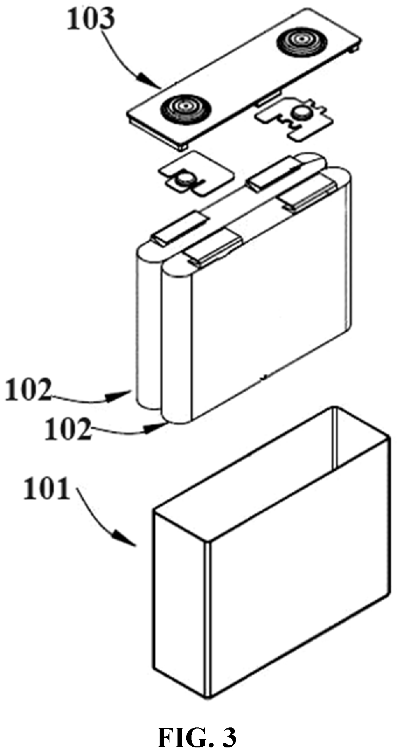

In some examples of the present application, referring to FIG. 3, the outer package may include a case 101 and a cover plate 103. The case 101 may include a bottom plate and a side plate connected to the bottom plate, and the bottom plate and the side plate enclose an accommodating cavity. The case 101 has an opening in communication with the accommodating cavity, and the cover plate 103 is capable of covering the opening to close the accommodating cavity. A positive electrode plate, a negative electrode plate, and a separator may form into an electrode assembly 102 by a winding process or a stacking process. The electrode assembly 102 is encapsulated in the accommodating cavity. The electrode assembly 102 is impregnated with an electrolyte solution. There may be one or a plurality of electrode assemblies 102 included in the secondary battery 10, which can be selected by those skilled in the art according to specific actual requirements.

The secondary battery according to the present application is beneficial for improving battery performance. The secondary battery may be used as a power source for an electrical apparatus or as an energy storage unit for an electrical apparatus. The electrical apparatus may be applied to power fields, such as a mobile device (e.g., a mobile phone, a laptop, and the like), an electric vehicle (e.g., an all-electric vehicle, a hybrid electric vehicle, a plug-in hybrid electric vehicle, an electric bicycle, an electric scooter, an electric golf cart, an electric truck, and the like), an electric train, a ship, a satellite, and an energy storage system, but it is not limited to the above fields.

For the convenience of description of some examples of the present application, illustration is made with an example in which the electrical apparatus is a vehicle. The negative electrode plate according to the present application is applied to a vehicle battery. Since the battery has good power performance, the starting speed of the vehicle is relatively fast. On the other hand, because the battery has high energy density, it can provide a longer cruising range for the vehicle within an effective space.

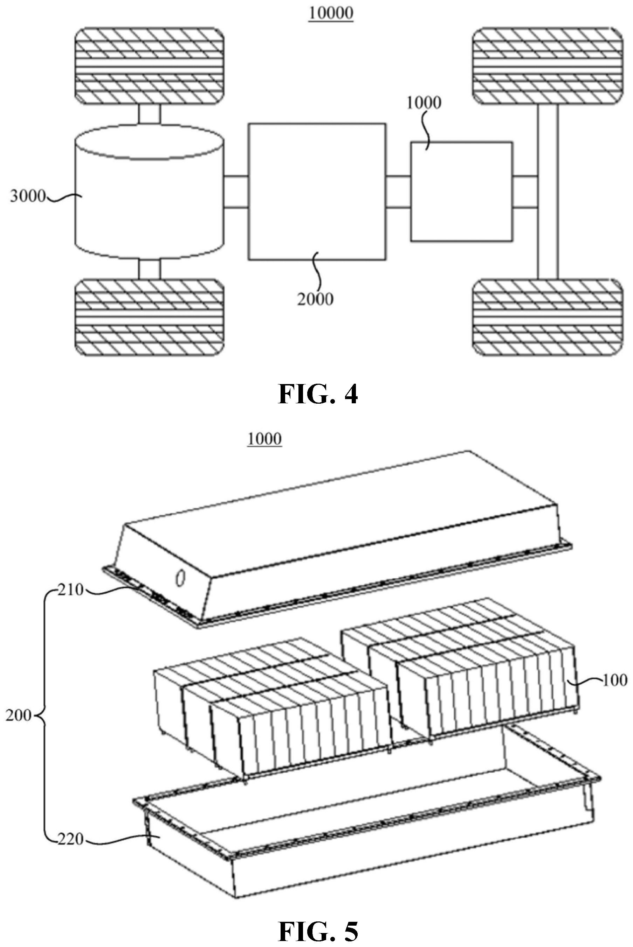

Referring to FIG. 4. FIG. 4 is a schematic structural diagram of a vehicle 10000 according to some examples of the present application. The vehicle 10000 may be a fuel vehicle, a gas vehicle, or a new energy vehicle. The new energy vehicle may be a pure electric vehicle, a hybrid vehicle, or an extended-range vehicle, etc. A battery 1000 is provided inside the vehicle 10000, and the battery 1000 may be disposed at a bottom, or head, or tail of the vehicle 10000. The battery 1000 may be configured to supply power to the vehicle 10000. For example, the battery 1000 may be used as an operating power source of the vehicle 10000. The vehicle 10000 may further include a controller 2000 and a motor 3000. The controller 2000 is configured to control the battery 1000 to supply power to the motor 3000, for example, to supply power for starting, navigation, and driving of the vehicle 10000.

In some examples of the present application, the battery 1000 may be used not only as an operating power source of the vehicle 10000, but also as a driving power source of the vehicle 10000, replacing or partially replacing fuel or natural gas to provide driving power for the vehicle 10000.

Referring to FIG. 5. FIG. 5 is an exploded diagram of a battery 1000 according to some examples of the present application. The battery 1000 include a box body 200 and battery cells 100. Conventional battery cells include primary batteries or secondary batteries. The present application specifically protects secondary batteries, and the battery cells 100 are accommodated in the box body 200. The box body 200 is configured to provide an accommodating space for the battery cells 100, and the box body 200 may be of various structures.

In some examples, the box body 200 includes a first part 210 and a second part 220. The first part 210 and the second part 220 cover each other, and the first part 210 and the second part 220 together define an accommodating space for accommodating the secondary batteries 100. The second part 220 may be a hollow structure with one opening end, the first part 210 may be a platy structure, and the first part 210 covers on an opening side of the second part 220, such that the first part 210 and the second part 220 jointly define the accommodating space. Alternatively, the first part 210 and the second part 220 may each be a hollow structure with one opening side, and an opening side of the first part 210 covers on an opening side of the second part 220. Certainly, the box body 200 formed by the first part 210 and the second part 220 may be in various shapes, such as a cylinder a cuboid.

In the battery 1000, there may be a plurality of battery cells 100, and the plurality of battery cells 100 may be connected in series, in parallel, or in parallel-series, and the parallel-series connection means that the plurality of battery cells 100 are connected in both series and parallel. The plurality of battery cells 100 may be directly connected in series, in parallel, or in parallel-series, and then the entirety formed by the plurality of battery cells 100 is accommodated in the box body 200. Of course, the battery 1000 may also be an entirety formed by connecting the plurality of battery cells 100 in series, in parallel, or in parallel-series to form battery 1000 modules and then connecting the plurality of battery 1000 modules in series, in parallel, or in parallel-series, and is then accommodated in the box body 200. The battery 1000 may further include other structures. For example, the battery 1000 may further include a busbar component configured to implement electrical connection among the plurality of battery cells 100.

### Secondary battery

In some examples, the present application discloses a secondary battery. The secondary battery includes a negative electrode plate and an electrolyte solution. The negative electrode plate includes a negative electrode active material including a graphitized carbon material, where the negative electrode active material satisfies the following conditions: (1.1) a specific surface area of the negative electrode active material is 0.5 m²/g to 3.0 m²/g; and (1.2) a volume distribution particle size Dv1 of the negative electrode active material is ≥ 1.5 µm; and the electrolyte solution includes a carboxylate-based solvent and a film-forming stabilizer.

The graphitized carbon material of the present application is a carbon material, and the carbon material mainly includes the element carbon. Moreover, the carbon material includes graphite, which may be a single type of graphite, or a mixture of multiple types of graphite, or a mixture of graphite and other carbon materials. The graphitized carbon material has good electrical conductivity and stability, so the present application chooses it as the negative electrode active material.

The specific surface area of the present application includes any conventional meaning in the art, and it can be tested and obtained using instruments or methods known in the art, for example, using a gas adsorption method to test the specific surface area, specifically obtained by testing with reference to the standard GB/T19587-2017.

The specific surface area of the negative electrode active material selected in the present application is 0.5 m²/g to 3.0 m²/g. Compared with conventional carbon materials in the art, the specific surface area is reduced, which may be influenced by the type and properties of the carbon material selected in the present application. The present application will discuss in detail the types and preparation methods of the carbon material below. In these examples, the present application discloses that the specific surface area of the negative electrode active material may be any one of 0.5 m²/g, 0.8 m²/g, 1.0 m²/g, 1.2 m²/g, 1.5 m²/g, 1.8 m²/g, 2.0 m²/g, 2.5 m²/g, 3.0 m²/g, or satisfy any value within the aforementioned range. The present application selects the negative electrode active material with a specific surface area of 0.5 m²/g to 3.0 m²/g to facilitate combined use with the carboxylate-based solvent and the film-forming stabilizer to improve the comprehensive performance of the battery of the present application.

The volume distribution particle size Dv1 of the present application has the same level of meaning as the conventional Dv50 in the art, specifically meaning that the volume of particles with a particle size smaller than this value accounts for 1%. The measurement method for Dv1 can refer to that for Dv50, using conventional measurement methods in the art, such as measuring the particle size distribution using a particle size analysis instrument and then obtaining it through statistics. In these examples, the present application chooses to measure by reference to the laser diffraction particle size analysis method, specifically obtaining a particle size distribution diagram with reference to the standard GB/T19077-2016, and then obtaining it through statistics and calculation. In these examples, the present application discloses that the volume of particles with a particle size less than 1.5 µm accounts for 1%. The present application controls the content of the small-particle-size negative electrode active material, thereby further reducing side reactions by decreasing its usage amount. Considering from another aspect, in the original negative electrode active material, the small-particle-size material occupies the internal pores, making the lithium-ion transport path more tortuous, thereby increasing the actual path length of lithium ions. Therefore, controlling the content of the small-particle-size negative electrode active material also positively promotes the improvement of the rate performance of the battery.

The carboxylate-based solvent of the present application includes those having a carboxylate group. Carboxylate-based solvents have the advantages of low viscosity and low surface tension, which makes them easier to diffuse to the positive and negative electrode surfaces. By improving the wettability of the positive and negative electrode active materials to the electrolyte, they can accelerate the diffusion rate of lithium ions and thus improve the rate performance of the battery. However, it also has obvious drawbacks: the probability of side reactions occurring on the positive and negative electrode surfaces is high, resulting in more gas production, which is not conducive to the cyclability of the battery. The present application selects the carboxylate-based solvent to be used in combination with the negative electrode active material having a relatively small specific surface area, which is conducive to balancing both the fast charging performance and the cycling performance of the secondary battery.

The film-forming stabilizer of the present application includes additives that facilitate improving the reaction between the carboxylate-based solvent and the positive and negative electrode active materials, thereby improving the stability of the interface film to improve the cycling stability of the battery and its use for high-rate charging and discharging.

In summary, the graphitized carbon material in the present application, as a negative electrode active material, has the characteristics of small specific surface area and low content of small-particle-size particles. When a negative electrode active material with these characteristics is used in conjunction with an electrolyte solution containing carboxylate-based solvents and film-forming stabilizers, it can improve the rate performance of secondary batteries and reduce the impact on the cycling performance of batteries.

In some examples of the present application, the specific surface area of the negative electrode active material is 0.5 m²/g to 2.0 m²/g.

In these examples, the present application further adjusts the specific surface area of the negative electrode active material to better match the electrolyte solution.

In some examples of the present application, the volume distribution particle size Dv1 of the negative electrode active material is 1.9 µm to 3.1 µm.

In these examples, the present application further defines the upper limit value of the volume distribution particle size Dv1, i.e., the volume or number of particles with a particle size less than or equal to 3.1 µm accounts for only 1%, and the volume or number of negative electrode materials with a smaller particle size is controlled. On one hand, this is to match the specific numerical value of the specific surface area of the aforementioned negative electrode active material, and on the other hand, it also prepares for improving the comprehensive performance of the battery.

In some examples of the present application, the graphitized carbon material satisfies at least one of the following:
(2.1) an orientation index (OI) value of the graphitized carbon material is ≤ 24; and
(2.2) a volume distribution particle size of the graphitized carbon material satisfies: 7.5 µm ≤ Dv50 ≤ 20 µm, Dv10 ≥ 3.5 µm, and Dv90 ≤ 40 µm.

In the present application, the orientation index (OI) value of the graphitized carbon material includes the degree of graphite orientation, which is mainly used to characterize the overall isotropy degree of graphite. By performing X-ray diffraction on the graphitized carbon material, the peak intensity values of a plane (110) and a plane (004) of the graphite crystal can be obtained. By calculating the ratio of the integrated peak areas of the two crystal planes, the orientation index (OI) value can be obtained. Generally speaking, the degree of graphite orientation is affected by the structural characteristics of the material itself, and the smaller the value of the degree of graphite orientation, the more favorable it is for the diffusion of lithium ions inside it, and problems such as cycling expansion of the battery can be better improved. However, the orientation index (OI) value also affects the compaction density, capacity, etc., of the battery; if it is too low, it may lead to low compaction density and low capacity. Compared with graphitized carbon materials conventionally used to improve the rate performance of batteries, the orientation index (OI) value of the material of the present application is relatively higher. This is because the present application also considers other properties of the battery and needs to take into account the actual degree of improvement in rate performance by the carboxylate-based solvent. In these examples, the present application discloses that the orientation index (OI) value of the graphitized carbon material can be any one of 24, 22, 20, 18, 16, 14, 12, 10, 8, or satisfy any value within the aforementioned range.

The volume distribution particle sizes Dv50, Dv10 and Dv90 of the graphitized carbon material of the present application have the same level of meaning as the volume distribution particle size Dv1 of the aforementioned negative electrode active material. Herein, Dv50 includes the cases where the volume of particles with a particle size larger than it accounts for 50%, and the volume of particles with a particle size smaller than it also accounts for 50%, also known as the median diameter, usually used to represent the average particle size of particles. Dv10 includes the case where the volume of particles with a particle size smaller than it accounts for 10%, and Dv90 includes the case where the volume of particles with a particle size smaller than it accounts for 90%. Whether it is Dv50, Dv10, or Dv90, the measurement and calculation methods are the same as above, for example, measuring the particle size distribution of the graphitized carbon material using a particle size analysis instrument and then obtaining it through statistics. In these examples, the present application chooses to measure by reference to the laser diffraction particle size analysis method, specifically obtaining a particle size distribution diagram with reference to the standard GB/T19077-2016, and then obtaining it through calculation.- In these examples, the present application discloses that the volume distribution particle size of the graphitized carbon material satisfies: 7.5 µm ≤ Dv50 ≤ 20 µm, Dv10 ≥ 3.5 µm, Dv90 ≤ 40 µm, i.e., the average particle size of the graphitized carbon material is 7.5 µm to 20 µm. Compared with conventionally used carbon materials, the particle size of the graphitized carbon material provided in the present application is increased, and the graphitized carbon material having this particle size conveniently meets the aforementioned requirements for a negative electrode active material with a relatively small specific surface area. In these examples, the present application discloses that Dv50 of the graphitized carbon material may be any one of 7.5 µm, 10 µm, 12 µm, 14 µm, 16 µm, 18 µm, 20 µm, or satisfy any value within the aforementioned range.

In some examples of the present application, the graphitized carbon material satisfies at least one of the following:
(3.1) an orientation index of the graphitized carbon material satisfies: 10 ≤ OI value ≤ 22; and
(3.2) a volume distribution particle size of the graphitized carbon material satisfies: 10 µm ≤ Dv50 ≤ 18.5 µm, 3.5 µm ≤ Dv10 ≤ 7.0 µm, Dv90 ≤ 40 µm.

The orientation index of the graphitized carbon material of the present application should not be too small. The present application selects 10 ≤ OI value ≤ 22 to better match the electrolyte solution for combined use.

At the same time, the present application has discussed above the control of the volume or number of the small-particle-size negative electrode active material, so the particle size uniformity of the graphitized carbon material has been improved to a relatively large extent. This improvement in particle size is significantly advantageous for reducing side reactions and improving rate performance.

In some examples of the present application, the negative electrode active material further includes an amorphous carbon, where the amorphous carbon includes any one of hard carbon or soft carbon.

The present application has discussed above that the negative electrode active material includes a graphitized carbon material. It may include only the graphitized carbon material, and this graphitized carbon material satisfies the aforementioned requirements of having a relatively small specific surface area and particle size. At the same time, the negative electrode active material may also include an amorphous carbon. This amorphous carbon has a relatively low degree of graphitization, such as hard carbon. On one hand, the hard carbon cooperates with the graphitized carbon material to satisfy the aforementioned requirements for a relatively small specific surface area and particle size. On the other hand, the combined use of hard carbon can improve the current distribution of the negative electrode, thereby improving the rate performance and cyclability of the graphitized material.

In some examples of the present application, a volume distribution particle size of the amorphous carbon satisfies: 3.5 µm ≤ Dv50 ≤ 7.0 µm.

The volume distribution particle size Dv50 of the amorphous carbon of the present application has the same level of meaning as the volume distribution particle size Dv50 of the aforementioned graphitized carbon material. Dv50 includes the case where the volume of particles with a particle size greater than it accounts for 50% and the volume of particles with a particle size smaller than it also accounts for 50%, which is also known as a median diameter and is usually used to represent an average particle size of particles. The measurement and calculation methods are the same as above, for example, measuring the particle size distribution of the graphitized carbon material using a particle size analysis instrument and then obtaining it through statistics. In these examples, the present application chooses to measure by reference to the laser diffraction particle size analysis method, specifically obtaining a particle size distribution diagram with reference to the standard GB/T19077-2016, and then obtaining it through calculation.- The present application selects the volume distribution particle size of the amorphous carbon to satisfy: 3.5 µm ≤ Dv50 ≤ 7.0 µm. Compared with the average particle size of the graphitized carbon material, the particle size of the amorphous carbon selected for use in the present application is relatively small, but it cannot be too small, because it is necessary to be consistent with the idea of the present application of controlling the content of the small-particle-size negative electrode material. At the same time, the amorphous carbon with a relatively small particle size being incorporated within the graphitized carbon material can average the porosity of the graphitized carbon material to improve current distribution, thus being conducive to further improving the rate performance of the battery.

In some examples of the present application, the graphitized carbon material includes one or more of natural graphite, artificial graphite, and composite graphite.

The composite graphite of the present application may also be referred to as modified graphite, which is obtained by further modification based on artificial graphite. In some examples, the present application focuses on discussing the graphitized carbon material being artificial graphite. A preparation method for this artificial graphite includes: providing a raw material, performing pulverizing and shaping → granulating → graphitization treatment → performing surface roughening treatment, to obtain an artificial graphite material. In these examples of the present application, the raw material may include one or more of raw coke and calcined coke; preferably, the raw material includes one or more of needle-like raw petroleum coke, non-needle-like raw petroleum coke, needle-like coal-based raw coke, non-needle-like coal-based raw coke, calcined needle coke, and calcined petroleum coke. The pulverizing of the present application may be performed using apparatuses and methods known in the art, for example, using a jet mill, a mechanical mill, or a roller mill. The crushing process usually generates a large amount of excessively small particles, and sometimes also generates excessively large particles. Therefore, after pulverizing, classification can be performed as needed to remove excessively small particles and excessively large particles from the pulverized powder. After classification, particle products with a better particle size distribution can be obtained, which is beneficial for subsequent shaping and/or granulating processes. Classification may be performed using apparatuses and methods known in the art, for example, a classifying screen, a gravity classifier, or a centrifugal classifier. The shaping of the present application may be performed using equipment known in the art (e.g., a molding machine or other shaping equipment) and methods. For example, the edges and corners of the obtained particle product are polished to facilitate subsequent operations and to provide the obtained product with higher stability. The granulating of the present application includes performing granulation using an apparatus known in the art, such as a granulator. A granulator usually includes a stirred reactor and a temperature control module for the reactor. Furthermore, the volume median particle size of the obtained product can be controlled by adjusting process conditions during the granulation process, such as stirring speed, heating rate, granulation temperature, and cooling rate. The graphitization treatment of the present application includes high-temperature graphitization treatment and low-temperature graphitization treatment. In some examples, any one or both of high-temperature graphitization treatment and low-temperature graphitization treatment can be appropriately selected for treatment according to actual specific needs. Alternatively, high-temperature graphitization treatment and/or low-temperature graphitization treatment may be repeated. Graphite with an appropriate degree of graphitization and graphite interlayer spacing can be obtained through high-temperature graphitization treatment. Graphite prepared at an appropriate graphitization temperature can obtain an appropriate degree of graphitization and graphite interlayer spacing, thereby enabling the composite artificial graphite to obtain higher structural stability and specific capacity. The surface roughening treatment of the present application includes using conventional treatment methods in the art, for example, using physical methods.

In some examples, the present application discloses a preparation method for artificial graphite, including the following steps:
S1: feeding a raw material via a vibratory feeder into a crusher for coarse crushing, then feeding qualified material into a mechanical mill for fine crushing, removing particles with Dv50 below 1.5 µm using a classifying screen, and then polishing the obtained particles to obtain a precursor with Dv50 of 5 µm to 25 µm;
S2: adding the precursor obtained in step S1 into a stirred reactor, adding 8% to 15%, relative to the weight of the precursor used for granulating, of a binder pitch (Dv50 of 5 µm to 8 µm) for granulating, with a stirring speed of 1000 r/min to 1500 r/min, raising the temperature at a rate of 10°C/min from room temperature to 550°C to 570°C, then maintaining a constant temperature for 5 to 10 hours, granulating until Dv50 is 10 µm to 30 µm, to obtain an intermediate 1; and
S3: adding the intermediate 1 obtained in step S2 into a graphitization furnace, raising the temperature to 2100°C to 2200°C for graphitization treatment, and sieving with a 200-mesh screen, to obtain artificial graphite whose volume distribution particle size satisfies: 7.5 µm ≤ Dv50 ≤ 20 µm, Dv10 ≥ 3.5 µm, and Dv90 ≤ 40 µm.

In some examples of the present application, the graphitized carbon material has a core-shell structure, a core of the core-shell structure including one or more of natural graphite, artificial graphite, and composite graphite, and a shell of the core-shell structure including an amorphous carbon coating layer.

In these examples, the present application discloses further mixing the artificial graphite prepared in the aforementioned examples with a coating agent according to a certain mass ratio or subjecting it to a carbonization treatment after preheating treatment, to obtain a graphitized carbon material whose surface is coated with an amorphous carbon coating layer. In these examples, the present application discloses that the coating agent includes but is not limited to conventional carbon source gases (volume percentage content of 10% to 15%), such as methane, ethylene, acetylene, etc. The carbonization treatment of the present application is preferably performed in an inert atmosphere furnace, with the temperature controlled between 700°C and 1800°C. Compared with an uncoated carbon material, the graphitized carbon material whose surface is coated with an amorphous carbon coating layer provided in the present application has a decreased specific surface area, a more uniform particle size distribution, and due to the isolation of the amorphous carbon coating layer, the probability of side reactions is also reduced.

In some examples of the present application, based on a total mass of the negative electrode active material, a mass percentage content of the graphitized carbon material is greater than 75%. In these examples, the present application discloses that the mass percentage content of the graphitized carbon material can be any one of 78%, 80%, 85%, 90%, 95%, and 100%.

In some examples, the present application discloses that the negative electrode active material includes only artificial graphite, and the mass percentage content of the artificial graphite is 100%.

In some examples, the present application discloses that the negative electrode active material includes artificial graphite and hard carbon, where the mass percentage content of the artificial graphite in the negative electrode active material is greater than 75%, and the remainder is hard carbon.

In some examples, the present application discloses that the negative electrode active material has a core-shell structure, where a core of the core-shell structure includes artificial graphite, and a shell of the core-shell structure includes an amorphous carbon coating layer, and the finally formed core-shell structure negative electrode active material is modified graphite. In this modified graphite, the mass percentage content of the artificial graphite in the negative electrode active material is greater than 75%, and the remainder is the amorphous carbon coating layer. The thickness of the amorphous carbon coating layer can be obtained by acquiring a transmission electron microscope image of the negative electrode active material. The content of the graphitized carbon material in the negative electrode active material is obtained based on the thickness of the amorphous carbon coating layer and in combination with an X-ray photoelectron spectroscopy analysis spectrum of the negative electrode active material. Herein, the methods for acquiring the transmission electron microscope image and the X-ray photoelectron spectroscopy analysis spectrum include using conventional instruments and test methods in the art.

In some examples, the present application discloses that the thickness of the amorphous carbon coating layer is between 10 nm and 20 nm. An amorphous carbon coating layer having this thickness is conducive to reducing the probability of side reactions thereof.

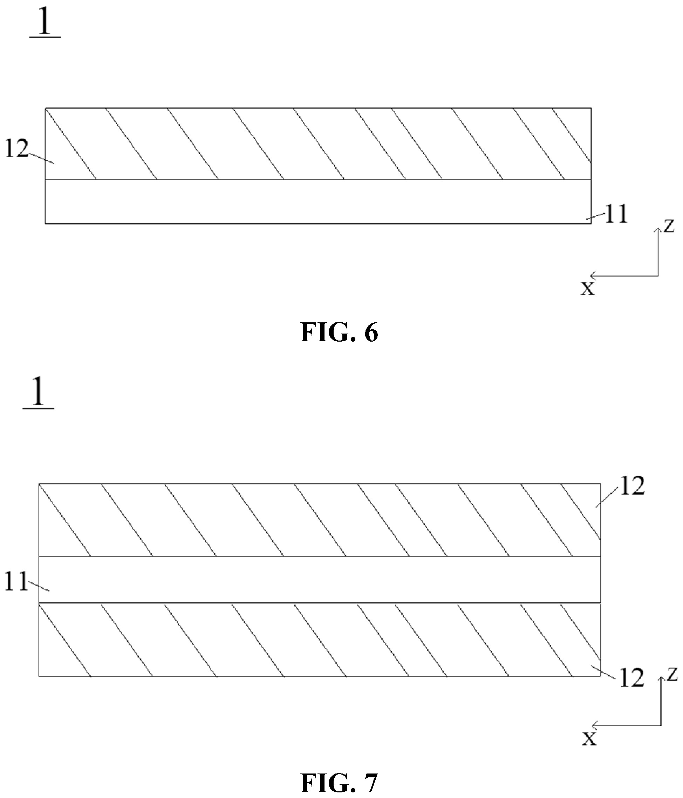

The negative electrode active material of the present application is mixed uniformly with a conductive agent, a thickener, a binder, etc., according to a certain mass ratio with a solvent to form a negative electrode slurry. After defoaming treatment of this negative electrode slurry, it is uniformly coated on one or both surfaces of a negative electrode current collector, and dried, as schematically shown in FIG. 6 and FIG. 7, to obtain a negative electrode plate including a negative electrode film layer. The solvent here includes but is not limited to water.

The conductive agent in the present application includes but is not limited to one or a combination of two of graphite, super conductive carbon, carbon black (such as acetylene black, Ketjen black, Super P, etc.), carbon dots, carbon nanotubes, graphene, and carbon nanofibers; the thickener includes cellulose and its sodium salts, the cellulose including methyl cellulose, carboxymethyl cellulose, hydroxyethyl cellulose, etc.; the binder includes but is not limited to polyvinyl alcohol, polyethylene glycol, sodium carboxymethyl cellulose, polyethylene oxide, polyacrylic acid, polyacrylamide, sodium alginate, styrene-butadiene rubber (SBR), etc.

In some examples, the present application discloses a mass ratio among the negative electrode active material, the conductive agent, the thickener, and the binder: (90 to 97):(0.5 to 3):(0.5 to 3):(0.5 to 3).

In some examples, the present application discloses that the negative electrode current collector includes but is not limited to a metal foil sheet or a composite current collector. The metal foil sheet may be a copper foil sheet. The composite current collector may include a polymer material substrate and a metal layer formed on at least one surface of the polymer material substrate. The composite current collector may be formed by forming a metal material, such as copper, copper alloy, nickel, nickel alloy, titanium, titanium alloy, silver, and silver alloy, on a substrate of a polymer material substrate such as polypropylene (PP), polyethylene terephthalate (PET), polybutylene terephthalate (PBT), polystyrene (PS), polyethylene (PE), etc.

In some examples of the present application, the carboxylate-based solvent satisfies at least one of the following:
(4.1) the carboxylate has the following structural formula:

   R1-COO-R2,

   where R1 and R2 each independently include a substituted and/or unsubstituted C1-C5 alkyl group; and
(4.2) based on a mass of the electrolyte solution, a mass percentage content of the carboxylate is 5% to 70%.

The solvent of the present application includes a carboxylate. The carboxylate has relatively stable properties, is not easily oxidized or reduced, and has good compatibility with the aforementioned lithium salt and additives. At the same time, when the solvent includes a carboxylate, the electrolyte solution may have a lower viscosity and a smaller surface tension. It cooperates with the lithium-containing transition metal phosphate having relatively more lithium-ion diffusion channels, facilitating full and effective contact between the lithium-containing transition metal phosphate and the electrolyte solution, thereby improving the rate performance of the battery. In these examples, the carboxylate selected in the present application is mainly a linear carboxylate, because the linear carboxylate has a lower melting point and viscosity, to better cooperate with the positive electrode active material: the lithium-containing transition metal phosphate, for use. In these examples, the present application further discloses that a mass percentage content of the carboxylate is 5% to 70%, where the mass percentage content of the carboxylate may be any one of 5%, 10%, 15%, 20%, 25%, 30%, 35%, 40%, 45%, 50%, 55%, 60%, 65%, 70%, or satisfy any value within the aforementioned range.

In some examples of the present application, the carboxylate-based solvent satisfies at least one of the following:
(5.1) the carboxylate includes one or more of ethyl acetate, methyl acetate, ethyl propionate, propyl acetate, methyl propionate, and methyl butyrate; and
(5.2) based on a mass of the electrolyte solution, a mass percentage content of the carboxylate is 10% to 60%.

As examples of the carboxylate, the carboxylate includes one or more of ethyl acetate, methyl acetate, ethyl propionate, propyl acetate, methyl propionate, and methyl butyrate. Carboxylate-based solvents have a relatively lower viscosity, and when multiple carboxylate-based solvents are used in combination, the electrolyte solution can have an even lower surface tension.

In some examples of the present application, the electrolyte solution further includes a carbonate solvent, the carbonate solvent including one or more of ethylene carbonate, propylene carbonate, fluoroethylene carbonate, vinylene carbonate, dimethyl carbonate, diethyl carbonate, and ethyl methyl carbonate.

The solubility of the lithium salt selected in the present application is better in carbonates than in carboxylates. Therefore, the present application selects to use the carboxylate in combination with the carbonate, to reduce the viscosity and melting point of the electrolyte solution without affecting the solubility of the lithium salt, thereby facilitating combined use with the lithium-containing transition metal phosphate.

As examples of the carbonate, the carbonate includes ethylene carbonate, propylene carbonate, fluoroethylene carbonate, vinylene carbonate, dimethyl carbonate, diethyl carbonate, and ethyl methyl carbonate, either individually or in combination. Selecting the exemplified carbonates is conducive to better combined use with the carboxylate.

In some examples of the present application, the film-forming stabilizer satisfies at least one of the following:
(6.1) in some examples of the present application, based on a total mass of the electrolyte solution, a mass percentage content of the film-forming stabilizer is 0.02% to 6%;
(6.2) the film-forming stabilizer includes one or more of boron-containing lithium salts, phosphorus-containing lithium salts, and sulfur-containing lithium salts;
(6.3) the boron-containing lithium salts include one or more of lithium tetrafluoroborate (LiBF₄), lithium bis(oxalato)borate (LiBOB), and lithium difluoro(oxalato)borate (LiDFOB);
(6.4) the phosphorus-containing lithium salts include one or more of lithium difluorophosphate (LiPO₂F₂), lithium fluorophosphate (Li₂PO₃F), and lithium phosphate (Li₃PO₄);
(6.5) the sulfur-containing lithium salts include one or more of lithium fluorosulfonate (LiFSO₃), lithium sulfate (Li₂SO₄), and lithium aminosulfonate (LiSO₃NH₂).

In the present application, the content of the film-forming stabilizer is controlled to be 0.02% to 6% based on the solubility of each type and the actual degree of film formation improvement in the electrolyte solution. In these examples, the present application discloses that the mass percentage content of the film-forming stabilizer may be any one of 0.02%, 0.05%, 0.08%, 0.1%, 0.15%, 0.2%, 0.3%, 0.4%, 0.5%, 0.6%, 0.7%, 0.8%, 0.9%, 1%, 2%, 3%, 4%, 5%, 6%, or satisfy any value within the aforementioned range.

In the present application, the boron-containing lithium salt, as a lithium salt with a B atom as the central atom, can coordinate with alkoxy groups, ortho-diphenols, ortho-hydroxyl groups, carboxylic acids, etc., to form anionic complexes. The anionic complexes mainly have a large π-conjugated structure. The negative-charge distribution of the central ion is relatively dispersed, and its charge is delocalized. At the same time, the anion radius is large, making it difficult for the anion to form strong ion pairs with lithium ions in organic solvents, and its solubility is relatively good. In the anionic complex, the more electron-withdrawing groups there are, the more stable the anion structure, and the higher the solubility of lithium ions in the electrolyte solution, which is more conducive to improving the electrical conductivity of the electrolyte solution. Moreover, the boron-containing lithium salt can form an SEI film with excellent performance on the surface of the negative electrode active material. The SEI film is insoluble in organic solvents and can exist stably in the organic electrolyte solution, effectively preventing solvent molecules in the electrolyte solution from intercalating into the negative electrode active material, thereby ensuring the structural stability of the negative electrode active material and thus improving the cycling performance of the secondary battery.

The phosphorus-containing lithium salt additive in the present application has a relatively large anionic group and high ionic conductivity, which is conducive to further improving the kinetic performance of the electrolyte solution. Moreover, the phosphorus-containing lithium salt additive can form a CEI film on the surface of the positive electrode active material. The CEI film formed has high lithium-ion conductivity, which can significantly inhibit the continuous decomposition of the electrolyte solution and reduce the dissolution of transition metal ions from the positive electrode active material, thereby improving the cycling performance of the secondary battery. In addition, the phosphorus-containing lithium salt additive can also form an SEI film on the surface of the negative electrode active material, which has low interfacial impedance, thereby significantly improving the cycling performance of the battery.

The sulfur-containing lithium salt additive in the present application has good oxidation resistance, high thermal stability, is insensitive to water in the electrolyte solution, and is not prone to side reactions. Moreover, the conductivity of the sulfur-containing lithium salt additive is relatively high, which is conducive to increasing the migration rate of lithium ions, thereby improving the kinetic performance of the electrolyte solution.

As examples of boron-containing lithium salts, the boron-containing lithium salt may include one or more of lithium tetrafluoroborate (LiBF₄), lithium bis(oxalato)borate (LiB(C₂O₄)₂, abbreviated as LiBOB), and lithium difluoro(oxalato)borate (LiBC₂O₄F₂, abbreviated as LiDFOB). Similarly, as examples of phosphorus-containing lithium salts, the phosphorus-containing lithium salt may include one or more of lithium difluorophosphate (LiPO₂F₂), lithium fluorophosphate (Li₂PO₃F), and lithium phosphate (Li₃PO₄). As examples of sulfur-containing lithium salts, the sulfur-containing lithium salt may include one or more of lithium fluorosulfonate (LiFSO₃), lithium sulfate (Li₂SO₄), and lithium aminosulfonate (LiSO₃NH₂).

In some examples of the present application, the film-forming stabilizer includes lithium fluorosulfonate and lithium difluorophosphate, where based on a total mass of the electrolyte solution, a mass percentage content of the lithium difluorophosphate is ≤ 1%, and a mass percentage content of the lithium fluorosulfonate is greater than or equal to 0.1% and less than 2%.

The present application selects lithium fluorosulfonate and lithium difluorophosphate to be simultaneously added to the electrolyte solution as film-forming stabilizers, to better match the aforementioned lithium salt. On the other hand, the solubility of each film-forming stabilizer in the solvent is constant. For example, the solubility of lithium difluorophosphate in organic solvents is not high, for instance, its content in carbonate-based solvents is about 1%, and its content in carboxylates such as ethyl acetate is about 3% to 4%. Further increasing its content may easily cause the electrolyte solution to become turbid. In these examples, the present application controls the mass percentage content of lithium difluorophosphate to be ≤ 1%, and the mass percentage content of lithium fluorosulfonate to be greater than or equal to 0.1% and less than 2%.

In addition to including the aforementioned carboxylate-based solvent and film-forming stabilizer, the electrolyte solution of the present application further includes a lithium salt. The lithium salt includes, but is not limited to, one or more of lithium hexafluorophosphate (LiPF₆), lithium bis(fluorosulfonyl)imide (LiFSI), and lithium bis(trifluoromethanesulfonyl)imide (LiTFSI).

The specific components and contents in the electrolyte solution of the present application can be determined using methods known in the art. For example, they can be measured by gas chromatography, gas chromatography-mass spectrometry (GC-MS), ion chromatography (IC), liquid chromatography (LC), nuclear magnetic resonance spectroscopy (NMR), inductively coupled plasma optical emission spectroscopy (ICP-OES), and the like.

In some examples of the present application, the secondary battery further includes a positive electrode plate, the positive electrode plate including a positive electrode active material, where a specific surface area of the positive electrode active material is 8 m²/g to 17 m²/g.

The specific surface area of the present application includes any conventional meaning in the art, and it can be tested and obtained using instruments or methods known in the art, for example, using a gas adsorption method to test the specific surface area, specifically obtained by testing with reference to the standard GB/T19587-2017.

The positive electrode active material selected in the present application has a relatively large specific surface area. The positive electrode active material having this specific surface area, when used in combination with the negative electrode active material protected in the present application, can balance both the rate performance and cyclability of the battery while reducing gas generation. In these examples, the present application discloses that the specific surface area of the positive electrode active material may be any one of 8 m²/g, 8.5 m²/g, 9 m²/g, 9.5 m²/g, 10 m²/g, 12 m²/g, 14 m²/g, 16 m²/g, 18 m²/g, or satisfy any value within the aforementioned range.

In some examples of the present application, the positive electrode active material includes a lithium-containing transition metal phosphate.

The positive electrode active material selected in the present application includes a lithium-containing transition metal phosphate, which is a type selection to satisfy the aforementioned specific surface area. On the other hand, the lithium-containing transition metal phosphate, as a positive electrode active, also has a significant rate capability deficiency in secondary batteries. Using it in combination with the negative electrode and the electrolyte solution of the present application is conducive to alleviating this problem.

In the present application, the lithium-containing transition metal phosphate includes olivine-type lithium manganese iron phosphate, a chemical formula of the lithium manganese iron phosphate being Li₍₁₋ₓ₁₎ Feₓ₂Mn₍₁₋ₓ₂₎PO₄, where 0 ≤ x1 < 1, 0 ≤ x2 ≤ 1. A battery assembled with the positive electrode active material having the aforementioned chemical formula of the present application is accompanied by deintercalation and consumption of lithium during charging and discharging processes. The molar content of lithium is different when the battery is discharged to different states. The aforementioned limitation includes the lithium content of the battery under different charge and discharge states within a voltage range of 2 V to 5 V.

The positive electrode plate of the present application includes a positive electrode current collector and a positive electrode film layer. The positive electrode film layer may be formed on one or both surfaces of the positive electrode plate. In addition to including the aforementioned positive electrode active material, the positive electrode film layer further includes a positive electrode conductive agent and a positive electrode binder. In these examples, the present application discloses that a mass ratio satisfies: lithium-containing transition metal phosphate : positive electrode conductive agent : positive electrode binder is (90% to 98%) : (0.5% to 5%) : (0.5% to 5%). Herein, the positive electrode conductive agent includes, but is not limited to, one or more of graphite, super conductive carbon, carbon black (such as acetylene black, Ketjen black, Super P, etc.), carbon dots, carbon nanotubes, graphene, and carbon nanofibers. The positive electrode binder includes, but is not limited to, one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, fluorinated acrylate resin, styrene-butadiene rubber, polyacrylic acid, sodium polyacrylate, polyacrylamide, polyvinyl alcohol, sodium alginate, polymethacrylic acid, carboxymethyl chitosan, etc.

In some examples of the present application, a preparation method for the positive electrode plate includes: mixing the components according to a certain mass ratio with a solvent to obtain a positive electrode slurry, coating the positive electrode slurry on one or both surfaces of the positive electrode current collector, heating and drying, and cooling to obtain a positive electrode plate including a positive electrode film layer. In these examples, the present application discloses that the heating and baking temperature is 90°C to 120°C, for example, it may be 90°C, 95°C, 100°C, 105°C, 110°C, 115°C, 120°C, etc. By adjusting the baking temperature, on the basis of promoting solvent volatilization and slurry solidification, it is possible to prevent the positive electrode active material and additives from undergoing thermal decomposition due to overheating. At the same time, the solvent used for preparing the positive electrode slurry includes one or more of N-methylpyrrolidone (NMP), N,N-dimethylformamide (DMF), N,N-diethylformamide (DEF), dimethyl sulfoxide (DMSO), pyridine, and tetrahydrofuran (THF). By selecting these solvents, the stability and dispersion uniformity of the positive electrode active material in the slurry can be improved; at the same time, the solubility of additives in the slurry can be increased, thereby solving problems such as unstable slurry, easy stratification, and sedimentation. The selected solvents are a non-aqueous system, which can solve the problem of additive hydrolysis due to heat.

In some examples, the present application also discloses that the positive electrode current collector may be a metal foil sheet or a composite current collector. The metal foil sheet may be an aluminum foil sheet. The composite current collector may include a polymer material substrate and a metal layer formed on at least one surface of the polymer material substrate. The composite current collector may be formed by forming a metal material, such as aluminum, aluminum alloy, nickel, nickel alloy, titanium, titanium alloy, silver, and silver alloy, on a substrate of a polymer material substrate such as polypropylene (PP), polyethylene terephthalate (PET), polybutylene terephthalate (PBT), polystyrene (PS), polyethylene (PE), etc.

### Separator

In some examples, the secondary battery further includes a separator. The present application has no particular limitation on the type of the separator, and any known porous separator having good chemical stability and mechanical stability can be selected.

In some embodiments, the separator includes a substrate material layer and a coating disposed on a surface of the substrate material layer, where a substrate material of the substrate material layer includes one or more of polyethylene, polypropylene, poly(p-phenylene terephthalamide), polyethylene terephthalate, polytetrafluoroethylene, polyacrylonitrile, polyimide, and polyamide; and the coating includes a ceramic coating and/or a polymer coating. The substrate material layer has good permeability for lithium ions, which is conducive to the migration of lithium ions; and the surface of the substrate material layer is provided with a coating, which can further improve the mechanical properties of the separator. Optionally, ceramic particles in the ceramic coating include one or more of SiO₂, Al₂O₃, AlOOH, CaO, TiO₂, MgO, ZnO, ZrO₂, Mg(OH)₂, and BaSO₄. Optionally, a polymer material of the polymer coating includes one or more of polyethylene (PE), polypropylene (PP), poly(p-phenylene terephthalamide) (PPTA), polyethylene terephthalate (PET), polytetrafluoroethylene (PTFE), polyacrylonitrile (PAN), polyimide (PI), and polyamide (PA). The polymer coating and the base material layer may be made of the same or different materials. The thicknesses of the polymer coating and the base material layer may be different. Optionally, the thickness of the polymer coating is less than the thickness of the base material layer.

In other embodiments, a material of the separator can be selected from at least one of glass fiber, non-woven fabric, polyethylene, polypropylene, and polyvinylidene fluoride. The separator may be a single-layer film or a multi-layer composite film, with no particular limitation. When the separator is a multi-layer composite film, the materials of each layer may be the same or different, with no particular limitation.

### Examples

The following examples more specifically describe the contents disclosed in the present application. These examples are intended for illustrative purposes only, because various modifications and changes made within the scope of the contents disclosed in the present application are apparent to those skilled in the art. Unless otherwise stated, all parts, percentages, and ratios reported in the following examples are based on mass, all reagents used in the examples are either commercially available or synthesized according to conventional methods, and may be directly used without further processing, and all the instruments used in the examples are commercially available.

### Example 1

### 1. Preparation of negative electrode active material - artificial graphite

S1: A needle-like raw petroleum coke raw material is fed via a vibratory feeder into a jet mill for coarse crushing. Then, qualified material is fed into a mechanical mill for fine crushing. Particles with Dv50 below 1.1 µm are removed using a classifying screen. The obtained particles are then polished to obtain a precursor with Dv50 of 15 µm.

S2: The precursor obtained in step S1 is added into a stirred reactor, and 10%, relative to the weight of the precursor used for granulating, of a binder pitch (Dv50 of 7.5 µm) is added for granulating. The stirring speed is 1200 r/min. The temperature is raised at a rate of 10°C/min from room temperature to 560°C, and then maintained at a constant temperature for 8 hours. Granulating is performed until Dv50 reaches 20 µm, obtaining an intermediate 1.

S3: The intermediate 1 obtained in step S2 is added into a graphitization furnace, and the temperature is raised to 2100°C to 2150°C for graphitization treatment. After sieving with a 200-mesh screen, an artificial graphite is obtained with Dv50 of 18.5 µm, Dv90 of 30 µm, Dv10 of 6.5 µm, and Dv1 of 3 µm, where the specific surface area of this artificial graphite is 0.52 m²/g, and the orientation index (OI) value of this artificial graphite is shown in Table 1.

### 2. Preparation of negative electrode plate:

The artificial graphite prepared above is dispersed together with a conductive agent conductive carbon, a stabilizer sodium carboxymethyl cellulose, and a binder SBR in deionized water according to a mass ratio of 94.5:1.5:1.5:2.5 to form a negative electrode slurry. The negative electrode slurry is uniformly coated on both side surfaces of a negative electrode current collector copper foil. Drying is performed using a nine-zone oven with temperature settings sequentially at 100°C/100°C/95°C/85°C/85°C/80°C/80°C/80°C/60°C. Then, compaction is performed using a cold press, so that a single-side coating weight of the negative electrode film layer is 0.15 g/1540.25 mm².

### 3. Preparation of electrolyte solution:

In an environment with a water content of less than 10 ppm, non-aqueous organic solvents ethylene carbonate and dimethyl carbonate are mixed in a volume ratio of 1:1 to obtain a first solvent. Ethyl acetate and propyl acetate are mixed in a volume ratio of 2:1 to obtain a second solvent. The first solvent and the second solvent are mixed according to a certain usage amount to form a non-aqueous solvent. A lithium salt lithium hexafluorophosphate is added to the non-aqueous solvent, and then film-forming stabilizers (lithium fluorosulfonate and lithium difluorophosphate) are added to prepare an electrolyte solution, where the content of each component in the electrolyte solution is shown in Table 2.

### 4. Preparation of positive electrode plate:

Lithium manganese iron phosphate (chemical formula: LiFe_{0.5}Mn_{0.5}PO₄, and specific surface area BET: 16.7 m²/g) : positive electrode conductive agent carbon black : positive electrode binder polyvinylidene fluoride (PVDF) are dispersed in an appropriate amount of solvent NMP according to a mass ratio of 98:0.9:1.1, and fully stirred and mixed to form a uniform positive electrode slurry. The positive electrode slurry is coated on both surfaces of a positive electrode current collector, and heated and dried. Specifically, a multi-zone oven is used with temperature settings sequentially at 120°C/100°C/90°C. Then, compaction is performed using a cold roller press to obtain a positive electrode plate with a compaction density of 2.7 g/cm³ of the positive electrode plate, and a single-side coating weight of the positive electrode plate is 0.34 g/1540.25 mm².

### 5. Separator:

A porous polyethylene (PE) film is used as the separator.

### 6. Preparation of secondary battery:

The aforementioned positive electrode plate, separator, and negative electrode plate are stacked in order, with the separator placed between the positive electrode plate and the negative electrode plate to provide isolation, and then wound to obtain an electrode assembly. The electrode assembly is placed into an outer packaging case, dried, and then injected with the electrolyte solution. After processes such as vacuum sealing, standing, formation, and shaping, a lithium-ion battery is obtained.

### Example 2

A secondary battery is provided, which differs from Example 1 in that the particle size and specific surface area selection of the artificial graphite are different, which is ultimately reflected in a different preparation method for the artificial graphite. The details are as follows:
S1: A needle-like coal-based raw coke raw material is fed via a vibratory feeder into a jet mill for coarse crushing. Then, qualified material is fed into a mechanical mill for fine crushing. Particles with Dv50 below 1.0 µm are removed using a classifying screen. The obtained particles are then polished to obtain a precursor with Dv50 of 13 µm.

S2: The precursor obtained in step S1 is added into a stirred reactor, and 10%, relative to the weight of the precursor used for granulating, of a binder pitch (Dv50 of 8 µm) is added for granulating. The stirring speed is 1000 r/min. The temperature is raised at a rate of 10°C/min from room temperature to 550°C, and then maintained at a constant temperature for 8 hours. Granulating is performed until Dv50 reaches 17.1 µm, obtaining an intermediate 1.

S3: The intermediate 1 obtained in step S2 is added into a graphitization furnace, and the temperature is raised to 2150°C to 2180°C for graphitization treatment. After sieving with a 200-mesh screen, an artificial graphite is obtained with Dv50 of 15.4 µm, Dv90 of 35.6 µm, Dv10 of 3.5 µm, and Dv1 of 2.5 µm. The specific surface area of this artificial graphite is 1.83 m²/g. Furthermore, the orientation index (OI) value of this artificial graphite is shown in Table 1.

### Example 3

A secondary battery is provided, which differs from Example 1 in that the particle size and specific surface area selection of the artificial graphite are different, which is ultimately reflected in a different preparation method for the artificial graphite. The details are as follows:
S1: A needle-like raw petroleum coke raw material is fed via a vibratory feeder into a jet mill for coarse crushing. Then, qualified material is fed into a mechanical mill for fine crushing. Particles with Dv50 below 0.8 µm are removed using a classifying screen. The obtained particles are then polished to obtain a precursor with Dv50 of 8.5 µm.

S2: The precursor obtained in step S1 is added into a stirred reactor, and 12%, relative to the weight of the precursor used for granulating, of a binder pitch (Dv50 of 7.5 µm) is added for granulating. The stirring speed is 1300 r/min. The temperature is raised at a rate of 10°C/min from room temperature to 570°C, and then maintained at a constant temperature for 8 hours. Granulating is performed until Dv50 reaches 10.4 µm, obtaining an intermediate 1.

S3: The intermediate 1 obtained in step S2 is added into a graphitization furnace, and the temperature is raised to 2100°C to 2150°C for graphitization treatment. After sieving with a 200-mesh screen, an artificial graphite is obtained with Dv50 of 7.8 µm, Dv90 of 22.3 µm, Dv10 of 3.5 µm, and Dv1 of 1.9 µm. The specific surface area of this artificial graphite is 2.5 m²/g. Furthermore, the orientation index (OI) value of this artificial graphite is shown in Table 1.

### Example 4-1

A secondary battery is provided, which differs from Example 1 in that the negative electrode active material includes the artificial graphite of Example 1 and also includes hard carbon. Particles with a volume distribution particle size of less than 1.5 µm in the hard carbon are removed, and then it is uniformly mixed with the artificial graphite.

Herein, Dv50 of the hard carbon is 7.0 µm. The mass percentage content of the hard carbon in the negative electrode active material is 20%, with the remaining 80% being the artificial graphite of Example 1, obtaining a specific surface area of the negative electrode active material of 0.83 m²/g.

### Example 4-2

A secondary battery is provided, which differs from Example 4-1 in that the mass percentage content of the hard carbon in the negative electrode active material is 10%, with the remaining 90% being the artificial graphite of Example 1, obtaining a specific surface area of the negative electrode active material of 0.68 m²/g.

### Example 4-3

A secondary battery is provided, which differs from Example 4-1 in that the mass percentage content of the hard carbon in the negative electrode active material is 5%, with the remaining 95% being the artificial graphite of Example 1, obtaining a specific surface area of the negative electrode active material of 0.60 m²/g.

### Example 4-4

A secondary battery is provided, which differs from Example 4-1 in that Dv50 of the hard carbon in the negative electrode active material is 5.0 µm, obtaining a specific surface area of the negative electrode active material of 0.90 m²/g.

### Example 4-5

A secondary battery is provided, which differs from Example 4-1 in that Dv50 of the hard carbon in the negative electrode active material is 3.5 µm, obtaining a specific surface area of the negative electrode active material of 1.0 m²/g.

### Example 5

A secondary battery is provided, which differs from Example 1 in that the negative electrode active material is prepared by using the artificial graphite of Example 1 as a raw material. The artificial graphite is placed in an inert atmosphere furnace. In an inert atmosphere, methane gas (with a volume percentage content of methane gas of 10% and a gas flow rate of 1.0 L/min) is introduced. The temperature is controlled at about 1000°C, and the reaction is carried out for 3 to 4 hours. An amorphous carbon coating layer is formed on the surface of the artificial graphite. The thickness of the carbon coating layer is at the nanometer level, about 10 nm. The content of the artificial graphite is about 80%. A carbon material having a core-shell structure is formed. The volume distribution particle size of this carbon material having a core-shell structure satisfies: Dv50 of 19 µm, Dv90 of 30.2 µm, Dv10 of 6.8 µm, and Dv1 of 3 µm. The specific surface area of this carbon material is 0.50 m²/g. Furthermore, the orientation index (OI) value of this carbon material is shown in Table 1.

Examples 6 to 12 each provide a secondary battery. The negative electrode active material of these secondary batteries is the same as that of Example 1.

**Table 1-1 Negative electrode active material performance list**

| - | **Negative electrode active material** | |
|---|---|---|
| | Specific surface area m²/g | Dv1 µm |
| Example 1 | 0.52 | 3 |
| Example 2 | 1.83 | 2.5 |
| Example 3 | 2.5 | 1.9 |
| Example 4-1 | 0.83 | 3 |
| Example 4-2 | 0.68 | 3 |
| Example 4-3 | 0.6 | 3 |
| Example 4-4 | 0.9 | 3 |
| Example 4-5 | 1 | 3 |
| Example 5 | 0.5 | 3 |
| Example 6 | 0.52 | 3 |
| Example 7 | 0.52 | 3 |
| Example 8 | 0.52 | 3 |
| Example 9 | 0.52 | 3 |
| Example 10 | 0.52 | 3 |
| Example 11 | 0.52 | 3 |
| Example 12 | 0.52 | 3 |
| Comparative example 1 | 5 | 1 |
| Comparative example 2 | 0.52 | 3 |
| Comparative example 3 | 0.52 | 3 |

**Table 1-2 Graphitized carbon material performance list**

| - | **Graphitized carbon material** | | | | | | | **Hard carbon** | |
|---|---|---|---|---|---|---|---|---|---|
| | Dv1 µm | Dv50 µm | Dv10 µm | Dv90 µm | Specific surface area m²/g | Orientation index (OI) value | Content % | Dv50 µm | Content % |
| Example 1 | 3 | 18.5 | 6.5 | 30 | 0.52 | 20.9 | 100% | None | 0 |
| Example 2 | 2.5 | 15.4 | 3.5 | 35.6 | 1.83 | 15.3 | 100% | None | 0 |
| Example 3 | 1.9 | 7.8 | 3.5 | 22.3 | 2.5 | 18.7 | 100% | None | 0 |
| Example 4-1 | 3 | 18.5 | 6.5 | 30 | 0.52 | 20.9 | 80% | 7.0 | 20% |
| Example 4-2 | 3 | 18.5 | 6.5 | 30 | 0.52 | 20.9 | 90% | 7.0 | 10% |
| Example 4-3 | 3 | 18.5 | 6.5 | 30 | 0.52 | 20.9 | 95% | 7.0 | 5% |
| Example 4-4 | 3 | 18.5 | 6.5 | 30 | 0.52 | 20.9 | 80% | 5.0 | 20% |
| Example 4-5 | 3 | 18.5 | 6.5 | 30 | 0.52 | 20.9 | 80% | 3.5 | 20% |
| Example 5 | 3 | 19 | 6.8 | 30.2 | 0.5 | 19.6 | 80% | None | 0 |
| Example 6 | 3 | 18.5 | 6.5 | 30 | 0.52 | 20.9 | 100% | None | 0 |
| Example 7 | 3 | 18.5 | 6.5 | 30 | 0.52 | 20.9 | 100% | None | 0 |
| Example 8 | 3 | 18.5 | 6.5 | 30 | 0.52 | 20.9 | 100% | None | 0 |
| Example 9 | 3 | 18.5 | 6.5 | 30 | 0.52 | 20.9 | 100% | None | 0 |
| Example 10 | 3 | 18.5 | 6.5 | 30 | 0.52 | 20.9 | 100% | None | 0 |
| Example 11 | 3 | 18.5 | 6.5 | 30 | 0.52 | 20.9 | 100% | None | 0 |
| Example 12 | 3 | 18.5 | 6.5 | 30 | 0.52 | 20.9 | 100% | None | 0 |
| Comparative example 1 | 1 | 18.5 | 6.5 | 30 | 4 | 20.9 | 100% | None | 0 |
| Comparative example 2 | 3 | 18.5 | 6.5 | 30 | 0.52 | 20.9 | 100% | None | 0 |
| Comparative example 3 | 3 | 18.5 | 6.5 | 30 | 0.52 | 20.9 | 100% | None | 0 |

### Examples 6-10

A secondary battery is provided, which differs from Example 1 in that the electrolyte solutions are different. See Table 2 for details. Herein, the contents of the carboxylates in Example 6 and Example 7 are different from those in Examples 1 to 5, the contents of the carbonates are different from those in Examples 1 to 5, and the contents and types of the film-forming stabilizers are different from those in Examples 1 to 5. The types of the carboxylates in Example 8 and Example 9 are different from those in Examples 1 to 5. The type of the film-forming stabilizer in Example 10 is different from those in Examples 1 to 5.

**Table 2 Electrolyte solution performance list**

| - | Carboxylate | | Carbonate | | Film-forming stabilizer | | Positive electrode active material |
|---|---|---|---|---|---|---|---|
| | Content % | Type | Content % | Type | Content % | Type | Specific surface area m²/g |
| Example 1 | 60% | Ethyl acetate + Propyl acetate | 23% | Ethylene carbonate + Dimethyl carbonate | 1%+1% | Lithium fluorosulfonate + Lithium difluorophosphate | 16.7 |
| Example 2 | 60% | Ethyl acetate + Propyl acetate | 23% | Ethylene carbonate + Dimethyl carbonate | 1%+1% | Lithium fluorosulfonate + Lithium difluorophosphate | 16.7 |
| Example 3 | 60% | Ethyl acetate + Propyl acetate | 23% | Ethylene carbonate + Dimethyl carbonate | 1%+1% | Lithium fluorosulfonate + Lithium difluorophosphate | 16.7 |
| Example 4-1 | 60% | Ethyl acetate + Propyl acetate | 23% | Ethylene carbonate + Dimethyl carbonate | 1%+1% | Lithium fluorosulfonate + Lithium difluorophosphate | 16.7 |
| Example 4-2 | 60% | Ethyl acetate + Propyl acetate | 23% | Ethylene carbonate + Dimethyl carbonate | 1%+1% | Lithium fluorosulfonate + Lithium difluorophosphate | 16.7 |
| Example 4-3 | 60% | Ethyl acetate + Propyl acetate | 23% | Ethylene carbonate + Dimethyl carbonate | 1%+1% | Lithium fluorosulfonate + Lithium difluorophosphate | 16.7 |
| Example 4-4 | 60% | Ethyl acetate + Propyl acetate | 23% | Ethylene carbonate + Dimethyl carbonate | 1%+1% | Lithium fluorosulfonate + Lithium difluorophosphate | 16.7 |
| Example 4-5 | 60% | Ethyl acetate + Propyl acetate | 23% | Ethylene carbonate + Dimethyl carbonate | 1%+1% | Lithium fluorosulfonate + Lithium difluorophosphate | 16.7 |
| Example 5 | 60% | Ethyl acetate + Propyl acetate | 23% | Ethylene carbonate + Dimethyl carbonate | 1%+1% | Lithium fluorosulfonate + Lithium difluorophosphate | 16.7 |
| Example 6 | 5% | Ethyl acetate + Propyl acetate | 80% | Ethylene carbonate + Dimethyl carbonate | 0.02% | Lithium fluorosulfonate | 16.7 |
| Example 7 | 70% | Ethyl acetate + Propyl acetate | 9% | Ethylene carbonate + Dimethyl carbonate | 6% | Lithium fluorosulfonate | 16.7 |
| Example 8 | 60% | Ethyl acetate + Ethyl propionate | 23% | Ethylene carbonate + Dimethyl carbonate | 1%+1% | Lithium fluorosulfonate + Lithium difluorophosphate | 16.7 |
| Example 9 | 60% | Ethyl acetate + Methyl butyrate | 23% | Ethylene carbonate + Dimethyl carbonate | 1%+1% | Lithium fluorosulfonate + Lithium difluorophosphate | 16.7 |
| Example 10 | 60% | Ethyl acetate + Propyl acetate | 24.8% | Ethylene carbonate + Dimethyl carbonate | 0.2% | Lithium difluoro(oxalato)bora te | 16.7 |
| Example 11 | 60% | Ethyl acetate + Propyl acetate | 23% | Ethylene carbonate + Dimethyl carbonate | 1%+1% | Lithium fluorosulfonate + Lithium difluorophosphate | 10 |
| Example 12 | 60% | Ethyl acetate + Propyl acetate | 23% | Ethylene carbonate + Dimethyl carbonate | 1%+1% | Lithium fluorosulfonate + Lithium difluorophosphate | 8 |
| Comparative example 1 | 60% | Ethyl acetate + Propyl acetate | 23% | Ethylene carbonate + Dimethyl carbonate | 1%+1% | Lithium fluorosulfonate + Lithium difluorophosphate | 16.7 |
| Comparative example 2 | 0 | None | 83% | Ethylene carbonate + Dimethyl carbonate | 1%+1% | Lithium fluorosulfonate + Lithium difluorophosphate | 16.7 |
| Comparative example 3 | 60% | Ethyl acetate + Propyl acetate | 25% | Ethylene carbonate + Dimethyl carbonate | 0 | None | 16.7 |

### Example 11

A secondary battery is provided, which differs from Example 1 in that a specific surface area of the positive electrode active material is 10 m²/g. See Table 2 for details.

### Example 12

A secondary battery is provided, which differs from Example 1 in that a specific surface area of the positive electrode active material is 8 m²/g. See Table 2 for details.

### Comparative example 1

A secondary battery is provided, which differs from Example 1 in that artificial graphite having a specific surface area of 5.0 m²/g is selected and used as the negative electrode active material, and the small-particle-size material in the artificial graphite is not controlled, so that it contains particles with a particle size of 1.5 µm or less, and a volume content proportion of this portion of particles is about 1%. See Table 1-1, Table 1-2, and Table 2 for details.

### Comparative example 2

A secondary battery is provided, which differs from Example 1 in that the electrolyte solution contains only carbonate-based solvents and does not use carboxylate-based solvents. See Table 1-1, Table 1-2, and Table 2 for details.

### Comparative example 3

A secondary battery is provided, which differs from Example 1 in that the electrolyte solution does not contain a film-forming stabilizer. See Table 1-1, Table 1-2, and Table 2 for details.

### [Performance test of negative electrode active material]

### ① Testing volume distribution particle size:

With reference to GB/T 19077-2016, a volume particle size distribution curve of the negative electrode active material is obtained. The particle size corresponding to a cumulative volume distribution percentage reaching 50% is taken as the average particle size Dv50, the particle size corresponding to a volume distribution percentage reaching 90% is taken as Dv90, the particle size corresponding to a volume distribution percentage reaching 10% is taken as Dv10, and the particle size corresponding to a volume distribution percentage reaching 1% is taken as Dv1. The testing instrument may be a Mastersizer 3000 laser particle size analyzer from Malvern Instruments Ltd., UK.

Specifically, a laser particle size analyzer (Malvern 3000, MasterSizer 3000) is used for testing, with a helium-neon red light source as the main light source. Take a clean small beaker, add 1 g of the sample to be tested, add 20 mL of deionized water (sample concentration ensures an obscuration of 8-12%), add one drop of a surfactant to reduce the surface tension of water to facilitate wetting of the particles, and sonicate at 53 kHz/120 W for 5 min to ensure complete dispersion of the sample. Turn on the laser particle size analyzer, clean the optical path system, and then automatically test the background. Stir the sonicated solution to be tested to disperse it uniformly, place it into the sample cell as required, and start measuring the particle size. The measurement result can be read directly from the instrument.

### ② Testing specific surface area;

With reference to GB/T 19587-2004, the nitrogen adsorption specific surface area analysis test method is used for testing, and the specific surface area of the negative electrode active material and/or the positive electrode active material is calculated using the Brunauer Emmett Teller (BET) method. The testing instrument may be a TRISTAR II 3020 specific surface area and porosity analyzer from Micromeritics, USA.

### ③ Testing orientation index (OI) value;

Place the graphitized carbon material on an X-ray powder diffractometer for detection to obtain the peak intensity values of the plane (110) and the plane (004) of the graphite crystal. By calculating the ratio of the integrated peak areas of the two crystal planes, the orientation index (OI) value can be obtained.

### [Performance test of battery]

### ④ High-temperature gas production test:

Charge the prepared battery to 100% SOC at a rate of 0.1C, place it for storage at 60°C, monitor the internal pressure of the battery online using a pressure gauge, and record the number of days of storage at 60°C when the cut-off pressure is 0.35 MPa. The test results are shown in Table 3.

### ⑤ Test of fast charging capability:

Perform the first charge and discharge on the batteries of the aforementioned examples and comparative examples with a current of 1C (i.e., the current value at which the theoretical capacity is completely discharged within 1 h), specifically including: at 35°C, charge the battery at a constant current of 1C rate to a voltage of 4.4V, then charge at a constant voltage until the current is ≤0.05C, stand for 5 min, then discharge at a constant current of 0.33C rate to a voltage of 2.8V, and record its actual capacity as C0. Then, charge the battery sequentially at constant currents of 1.0C0, 1.3C0, 1.5C0, 1.8C0, 2.0C0, 2.3C0, 2.5C0, 3.0C0, 3.5C0, 4C0, 4.5C0, and 5C0 to the full battery charging cut-off voltage of 4.4V or the 0V negative electrode cut-off potential (whichever is reached first). After each charging is completed, discharge at 1C0 to the full battery discharging cut-off voltage of 2.8V. Record the negative electrode potentials corresponding to charging to 10%, 20%, 30%, ..., 80% SOC (State of Charge, where "SOC=0" indicates the battery is fully discharged, and "SOC=100%" indicates the battery is fully charged) at different charging rates. Plot the charging rate-negative electrode potential curves under different SOC states. After linear fitting, obtain the charging rate corresponding to the negative electrode potential of 0V under different SOC states. This charging rate is the charging window under that SOC state, recorded as C10%SOC, C20%SOC, C30%SOC, C40%SOC, C50%SOC, C60%SOC, C70%SOC, and C80%SOC, respectively. Calculate the charging time T for the battery to charge from 10% SOC to 80% SOC according to the formula (60/C20%SOC+60/C30%SOC+60/C40%SOC+60/C50%SOC+60/C60%SOC+60/C70%SOC+60 /C80%SOC)×10%, with the unit in minutes. The shorter this time, the better the fast charging performance of the battery.

### ⑥ Cycling performance test:

At 45°C, charge the secondary batteries prepared in the examples and comparative examples at a constant current of 1C (i.e., the current value at which the theoretical capacity is completely discharged within 1 h) to 3.75V, then charge at a constant voltage of 3.75V until the current is 0.05C, stand for 5 min, then discharge at a constant current of 1C to 2.5V, stand for 30 min. This constitutes one charge-discharge cycle process. Record the battery capacity at this time as C0 Perform n cycles of charge and discharge on the battery according to this method, and record the battery capacity after n cycles as C1. Then, the cycle capacity retention rate of the battery at 25°C = C1/C0 × 100%. Record the number of cycles n corresponding to when the measured cycle capacity retention rate of the battery is 80%.

**Table 3 Battery performance list**

| | Storage days (days) | Fast charging performance Charging time from 10% to 80% SOC/min | Number of cycles at 80% capacity (cycles) |
|---|---|---|---|
| Example 1 | 180 | 16 | 4021 |
| Example 2 | 170 | 14.5 | 3952 |
| Example 3 | 155 | 13.5 | 3821 |
| Example 4-1 | 152 | 11.2 | 3643 |
| Example 4-2 | 163 | 11.8 | 3692 |
| Example 4-3 | 172 | 12.3 | 3719 |
| Example 4-4 | 154 | 11.4 | 3658 |
| Example 4-5 | 156 | 11.6 | 3703 |
| Example 5 | 183 | 16.4 | 4054 |
| Example 6 | 195 | 19.2 | 3988 |
| Example 7 | 175 | 15.8 | 3979 |
| Example 8 | 182 | 16.7 | 4051 |
| Example 9 | 185 | 17.2 | 4080 |
| Example 10 | 172 | 15.8 | 3962 |
| Example 11 | 190 | 16.2 | 4061 |
| Example 12 | 195 | 16.3 | 4100 |
| Comparative example 1 | 130 | 17 | 3508 |
| Comparative example 2 | 197 | 16.8 | 3451 |
| Comparative example 3 | 153 | 20.1 | 3320 |

In combination with Examples and Comparative Example 1 in Table 3, if the specific surface area of the negative electrode active material is not controlled and the content of active material of small particles is not controlled, it is impossible to achieve both cycle stability and fast charging performance of the secondary battery. It can be seen from Comparative Example 2 and Comparative Example 3 that when the electrolyte solution does not contain a carboxylate-based solvent, the rate performance of the battery is poor; and when it does not contain a film-forming stabilizer, the cycle stability of the battery deteriorates. Therefore, in the present application, by controlling the negative electrode active material, the graphitized carbon material used as the negative electrode active material has the characteristics of a small specific surface area and containing few small-particle-size particles. The negative electrode active material having these characteristics is used in combination with an electrolyte solution containing a carboxylate-based solvent and a film-forming stabilizer, which, while improving the rate performance of the secondary battery, can also reduce the impact on the cycling performance of the battery.

Finally, it is to be noted that the above examples are only used for illustrating the technical solutions of the present application, not to limit them, and although the present application is described in detail with reference to the foregoing examples, those of ordinary skill in the art should understand that it may still modify the technical solutions described in the foregoing examples, or replace some or all of the technical features therein, and these modifications or substitutions do not make the essence of the corresponding technical solutions out of the scope of the technical solutions of the examples of the present application, and they should be covered by the scope of the claims and description of the present application. In particular, the technical features mentioned in the various examples can be combined in any manner as long as there is no structural conflict. The present application is not limited to the specific examples disclosed herein, but includes all technical solutions falling within the scope of the claims.

## Claims

1. A secondary battery, comprising:
a negative electrode plate: comprising a negative electrode active material, wherein the negative electrode active material satisfies the following conditions:
(1.1) a specific surface area of the negative electrode active material is 0.5 m²/g to 3.0 m²/g; and
(1.2) a volume distribution particle size Dv1 of the negative electrode active material is ≥ 1.5 µm; and
the negative electrode active material comprises a graphitized carbon material; and
an electrolyte solution: comprising a carboxylate-based solvent and a film-forming stabilizer.

2. The secondary battery according to claim 1, wherein: the specific surface area of the negative electrode active material is 0.5 m²/g to 2.0 m²/g;
and/or;
the volume distribution particle size Dv1 of the negative electrode active material is 1.9 µm to 3.1 µm.

3. The secondary battery according to any one of claims 1 to 2, wherein: the graphitized carbon material satisfies at least one of the following:
(2.1) an orientation index (OI) value of the graphitized carbon material is ≤ 24, the orientation index (OI) value being derived from peak intensity values of a plane (110) and a plane (004) in an X-ray powder diffraction pattern of the graphitized carbon material; and
(2.2) a volume distribution particle size of the graphitized carbon material satisfies: 7.5 µm ≤ Dv50 ≤ 20 µm, Dv10 ≥ 3.5 µm, and Dv90 ≤ 40 µm.

4. The secondary battery according to any one of claims 1 to 3, wherein: the graphitized carbon material satisfies at least one of the following:
(3.1) an orientation index of the graphitized carbon material satisfies: 10 ≤ OI value ≤ 22; and
(3.2) a volume distribution particle size of the graphitized carbon material satisfies: 10 µm ≤ Dv50 ≤ 18.5 µm, 3.5 µm ≤ Dv10 ≤ 7.0 µm, and Dv90 ≤ 40 µm.

5. The secondary battery according to any one of claims 1 to 4, wherein: the negative electrode active material further comprises an amorphous carbon, wherein the amorphous carbon comprises one or both of hard carbon or soft carbon;
and/or;
a volume distribution particle size of the amorphous carbon satisfies: 3.5 µm ≤ Dv50 ≤ 7.0 µm;
and/or;
the graphitized carbon material comprises one or more of natural graphite, artificial graphite, and composite graphite.

6. The secondary battery according to any one of claims 1 to 5, wherein: the graphitized carbon material has a core-shell structure, a core of the core-shell structure comprising one or more of natural graphite, artificial graphite, and composite graphite, and a shell of the core-shell structure comprising an amorphous carbon coating layer.

7. The secondary battery according to any one of claims 1 to 6, wherein: based on a total mass of the negative electrode active material, a mass percentage content of the graphitized carbon material is greater than 75%.

8. The secondary battery according to any one of claims 1 to 7, wherein: the carboxylate-based solvent satisfies at least one of the following:
(4.1) the carboxylate has the following structural formula:
R1-COO-R2;
wherein R1 and R2 each independently comprise a substituted and/or unsubstituted C1-C5 alkyl group; and
(4.2) based on a mass of the electrolyte solution, a mass percentage content of the carboxylate is 5% to 70%.

9. The secondary battery according to any one of claims 1 to 8, wherein: the carboxylate-based solvent satisfies at least one of the following:
(5.1) the carboxylate comprises one or more of ethyl acetate, methyl acetate, ethyl propionate, propyl acetate, methyl propionate, and methyl butyrate; and
(5.2) based on a mass of the electrolyte solution, a mass percentage content of the carboxylate is 10% to 60%.

10. The secondary battery according to any one of claims 1 to 9, wherein: the electrolyte solution further comprises a carbonate solvent, the carbonate solvent comprising one or more of ethylene carbonate, propylene carbonate, fluoroethylene carbonate, vinylene carbonate, dimethyl carbonate, diethyl carbonate, and ethyl methyl carbonate.

11. The secondary battery according to any one of claims 1 to 10, wherein: the film-forming stabilizer satisfies at least one of the following:
(6.1) based on a total mass of the electrolyte solution, a mass percentage content of the film-forming stabilizer is 0.02% to 6%; and
(6.2) the film-forming stabilizer comprises one or more of boron-containing lithium salts, phosphorus-containing lithium salts, and sulfur-containing lithium salts; and
the boron-containing lithium salts comprise one or more of lithium tetrafluoroborate, lithium bis(oxalato)borate, and lithium difluoro(oxalato)borate;
and/or;
the phosphorus-containing lithium salts comprise one or more of lithium difluorophosphate, lithium fluorophosphate, and lithium phosphate;
and/or;
the sulfur-containing lithium salts comprise one or more of lithium fluorosulfonate, lithium sulfate, and lithium aminosulfonate.

12. The secondary battery according to any one of claims 1 to 11, wherein: the film-forming stabilizer comprises lithium fluorosulfonate and lithium difluorophosphate, wherein based on a total mass of the electrolyte solution, a mass percentage content of the lithium difluorophosphate is ≤ 1%, and a mass percentage content of the lithium fluorosulfonate is greater than or equal to 0.1% and less than 2%.

13. The secondary battery according to any one of claims 1 to 12, further comprising: a positive electrode plate, the positive electrode plate comprising a positive electrode active material, wherein a specific surface area of the positive electrode active material is 8 m²/g to 17 m²/g.

14. The secondary battery according to any one of claims 1 to 13, wherein: the positive electrode active material comprises a lithium-containing transition metal phosphate;
wherein the lithium-containing transition metal phosphate comprises olivine-type lithium manganese iron phosphate, a chemical formula of the olivine-type lithium manganese iron phosphate being Li₍₁₋ₓ₁₎ Feₓ₂Mn₍₁₋ₓ₂₎PO₄, wherein 0 ≤ x1 < 1, 0 ≤ x2 ≤ 1.

15. An electrical apparatus, comprising the secondary battery according to any one of claims 1 to 14.
